# EUROPÄISCHE PATENTSCHRIFT

(11) **EP 1 425 313 B1**
(45) Veröffentlichungstag und Bekanntmachung des Hinweises auf die Patenterteilung: **09.02.2005**
(21) Anmeldenummer: 02754870.0
(22) Anmeldetag: 11.07.2002
(51) Int. Cl.: C08F 2/22, C08F 291/00

(54) **VERFAHREN UND VORRICHTUNG ZUR HERSTELLUNG VON POLYMERDISPERSIONEN**
METHOD AND DEVICE FOR PRODUCING POLYMER DISPERSIONS
PROCEDE ET DISPOSITIF DE PRODUCTION DE DISPERSIONS POLYMERIQUES

(30) Priorität: 12.07.2001 DE 10134023
(43) Veröffentlichungstag der Anmeldung: 09.06.2004
(73) Patentinhaber: BASF AKTIENGESELLSCHAFT, 67056 Ludwigshafen (DE)
(72) Erfinder: FUNKHAUSER, Steffen, 68519 Viernheim (DE); RICHTER, Frauke, 81827 München (DE); KASTENHUBER, Walter, 68229 Mannheim (DE); LAPPE, Andreas, 67150 Niederkirchen (DE); KESSLER, Jochen, 67454 Hassloch (DE); HÜMMER, Wolfgang, 67134 Birkenheide (DE); WILDBURG, Gerald, 67346 Speyer (DE)
(74) Vertreter: Isenbruck, Günter, Dr.
(86) Internationale Anmeldenummer: PCT/EP2002/007748
(87) Internationale Veröffentlichungsnummer: WO 2003/006510

(56) Entgegenhaltungen:
- EP-A- 0 834 518

## Beschreibung

Die Erfindung bezieht sich auf ein Verfahren und eine Vorrichtung zur Herstellung von Polymerdispersionen.

In der Regel werden Emulsionspolymerisationen so vorgenommen, dass ein oder mehrere polymerisierbare Monomere in einer möglichst bei der Reaktion inerten Flüssigkeit - üblicherweise Wasser - dispers verteilt werden, wobei als Dispergierhilfsmittel Seifen oder Detergentien anwesend sind. Die Polymerisation erfolgt meist in den gebildeten, Monomeres enthaltenden Micellen durch Initiatorradikale. Hohe Molekularmassen können dabei erhalten werden, da Monomeres fortlaufend in die Micellen eindringen kann. Der Mechanismus ist normalerweise der einer radikalischen Polymerisation, die Reaktionsprodukte können häufig direkt als Dispersion weiterverarbeitet werden (zum Beispiel bei der Herstellung von Farben und Klebstoffen). Bekannte Einsatzstoffe sind Alkyl(meth)acrylate, Vinylester von Carbonsäuren, vinylaromatische Verbindungen, Nitrile, Vinylhalogenide, Vinylether, Kohlenwasserstoffe mit 2 bis 8 C-Atomen und einer oder zwei olefinischen Doppelbindungen (Butadien, Isopren, Chloropren) oder Hydroxylgruppen enthaltende Monomere. Die Teilchengröße und Teilchengrößenverteilung lassen sich häufig durch die Vorgabe oder in-situ Erzeugung von Saat(-Teilchen) steuern. Typische Verfahrensbedingungen im industriellen Maßstab sind Reaktionsdauern zwischen 2 bis 12 Stunden bei Temperaturen im Bereich zwischen 40°C und 100°C.

In DE 23 32 637 A ist eine Emulsionspolymerisation beschrieben, bei der Butadien mit Comonomeren wie Styrol, Acrylnitril (AN) oder Estern der Acryl- oder Methacrylsäure in Gegenwart üblicher Emulgierhilfsmittel wie höheren Fettsäuren, höheren Alkyl(acryl)sulfonaten, Anlagerungsprodukten von Alkylenoxiden an langkettigen Fettalkoholen und radikalbildenden Initiatoren wie Alkalipersulfaten bei Temperaturen von mehr als 115°C umgesetzt wird. Als Vorteil gegenüber dem Stand der Technik mit Temperaturen von weniger als 80°C wird die höhere Polymerisationsgeschwindigkeit genannt. Allerdings werden die anwendungstechnischen Eigenschaften solcher bei sehr hohen Temperaturen hergestellten Produkte oftmals negativ beeinflusst, zum Beispiel in Bezug auf die Molekularmassenverteilung, die Teilchengrößenverteilung und damit verbunden zum Beispiel die Klebkraft.

Dennoch ist die Reaktionsführung bei höheren Temperaturen, d.h. von mehr als 80°C, insbesondere von mehr als 85°C - eine für großtechnische Anlagen wichtige Maßnahme, da die Reaktionszeiten signifikant verringert werden können. Ein großtechnisches Verfahren lässt sich somit mit niedrigeren Zykluszeiten durchführen, was Investitionskosten für eine größere Anlagenzahl einspart. Ein dabei zu lösendes wichtiges Problemfeld ist die Wärmeführung, beispielsweise um lokale Überhitzungen bei exothermen Reaktionen zu vermeiden, die häufig zu unerwünschten Nebenreaktionen, ungleichförmigen Molekularmassenverteilungen oder Teilchengrößen führen können.

Aus der EP-A 0 486 262 ist die Herstellung von Emulsionscopolymeren bekannt, bei der eine Energiebilanz-Überwachung zur Steuerung der Zuführung der Comonomeren und der Temperatur dient. Zur Temperaturführung wird u.a. ein externer Wärmetauscher eingesetzt. Über die Qualität der Produkte oder den Aufbau der Pumpen oder Wärmetauscher sind keine Angaben entnehmbar.

EP 0 608 567 A offenbart den Einsatz einer Hydrostar-Pumpe in der Suspensionspolymerisation von VC zu Homo- oder Copolymeren in einem Kessel mit Rührer und einem externen Wärmetauscher. Durch diese wird die Reaktionsmischung in einem Winkel von 90° geführt, wobei das Innere eine konisch geformte Nabe mit einem Flügelblatt aufweist, die sich spiralförmig rotierend bewegt. Rührenergie und Zirkulationsenergie müssen in einem bestimmten Verhältnis zueinander eingestellt werden. Eine vergleichbare Pumpe wird auch in der aus EP 0 526 741B1 bekannten Lösung eingesetzt.

In einem Verfahren zur Herstellung von Emulsionspolymerisaten nach der DE 44 42 577A wird die bei der exothermen Reaktion freiwerdende Energie teilweise durch Abdestillieren eines Wasser-Monomer-Gemischs unter reduziertem Druck aus einem Reaktionsbehälter abgeführt. Diese Vorgehensweise führt zwar zu einer Reduktion der Polymerisationsdauer, ist aber für großtechnische Anlagen noch nicht geeignet, zumal die Einsatzbreite zum Beispiel ihre Anwendung für niedrigsiedende bzw. unter Normalbedingungen gasförmige (Co)Monomere wie zum Beispiel vom Butadien-Typ kaum gewährleistet.

EP-A-835 518 beschreibt ein Verfahren zur Herstellung von Homo- und Copolymerisaten nach der Methode der radikalisch initiierten wässrigen Emulsionspolymerisation, wobei ebenfalls ein externer Wärmetauscher zur Kühlung eingesetzt wird.

Aus WO 99/14496 ist eine Schlauchmembranpumpe bekannt, welche zur Förderung chemischer Medien eingesetzt werden kann.

Bei der Förderung von handelsüblichen Polymerdispersionen sind bisher Pumpen eingesetzt worden, deren Laufräder während der Polymerisation zum Blockieren neigten. Dies wurde durch Polymerisatbildung in schlecht durchströmten Laufradbereichen verursacht, wo sich beispielsweise an Versteifungs- und Verstärkungsrippen Ablagerungen gebildet haben, die dann binnen kürzester Zeit zum Ausfall der Pumpen führten. Bei bisher verwendeten Konfigurationen war unerheblich, ob die Laufräder von einem Spiralgehäuse umschlossen waren oder ob sie frei aus dem Pumpenraum hervorragten.

Als Pumpentypen zur Förderung zur Koagulation neigender Medien kamen bisher Kreiskolbenpumpen, Freistrompumpen, Scheibenpumpen, Exzenterschneckenpumpen und Kolbenmembranpumpen sowie Schraubenspindelpumpen zum Einsatz. Auch mit gerundeten Flügeln zur strömungsgünstigen Förderung ausgestattete Laufräder sind eingesetzt worden, wie sie zum Beispiel aus DE 199 40 399 A1 hervorgehen.

Die herzustellenden Polymerdispersionen können sehr scherempfindlich sein und während des Herstellprozesses ihre Viskosität in weiten Bereichen verändern. Die Polymerdispersionen können zur Koagulatbildung neigen, wodurch spezielle Anforderungen an die das Reaktionsgemisch umwälzende Pumpe zu stellen sind. Die Pumpe sollte möglichst scherungsarm fördern, so dass Koagulatbildung unterbleibt. Ferner muss die Pumpe widerstandsfähig gegen ein gewisses Maß an Belagbildung sein.

Aufgabe der vorliegenden Erfindung ist es daher, einen großtechnisch durchführbaren Herstellprozess mit einem breiten Einsatzgebiet aufzuzeigen, der insbesondere kurze Reaktionszeiten ermöglicht, ein breites Spektrum an unterschiedlichen, auch unter Normalbedingungen gasförmigen Monomeren akzeptiert und in den anwendungstechnischen Eigenschaften mit aktuell hergestellten Produkten mindestens vergleichbar ist und hinsichtlich des Reinigungsaufwandes der Anlagenkomponenten durch Belagbildung und Verschmutzung bei zur Koagulatbildung neigenden Dispersionen unkritisch ist.

Erfindungsgemäß wird diese Aufgabe durch ein Verfahren zur Herstellung von Polymeren mindestens eines der polymerisierbaren Monomeren aus den Gruppen Alkyl(meth)acrylate, Vinylester von Carbonsäuren, vinylaromatische Verbindungen, Nitrile, Vinylhalogenide, Vinylether, Kohlenwasserstoffe mit 2-8 C-Atomen und ein oder zwei olefinischer Doppelbindungen oder Hydroxylgruppen enthaltende Monomere unter Einsatz eines radikalischen Polymerisa-tionsinitiators gelöst. Das erfindungsgemäße Verfahren ist dadurch gekennzeichnet, dass das zu mindestens 85 Gew.-% aus einem oder mehreren dieser Monomeren entstehende Polymere in folgenden Stufen hergestellt wird, wobei
a) in einer ersten Stufe Wasser, als bei der Reaktion inertes Lösungsmittel, gegebenenfalls Dispergierhilfsmittel, gegebenenfalls Saat und gegebenenfalls eine erste Teilmenge an Monomer(en) vorgegeben werden,
b) in einer zweiten Stufe Initiator, und
c) in einer dritten Stufe die Restmenge oder die vollständige Menge an Monomer(en) direkt oder in Emulsionsform in Anwesenheit von weiterem Wasser und gegebenenfalls weiterem Dispergierhilfsmittel oder anderen Hilfsstoffen zugesetzt werden,
wobei die Stufen a) und b) oder b) und c) jeweils einstufig oder b) und c) in Gradientenfahrweise durchfahren werden können und in einzelnen oder allen Stufen das vorliegende Reaktionsgemisch durch einen vom und wieder zum Reaktionsbehälter führenden externen Kreislauf zur Kühlung bewegt wird, der ein oder mehrere scherungsarm fördernde Zylinder- bzw. Schlauchmembranpumpen und mindestens einen Wärmetauscher aufweist, wobei die Polymerisationstemperatur zwischen 40°C und 120°C liegt.

Der Einsatz einer extrem scherungsarm fördernden Zylinder- bzw. Schlauchmembranpumpe erlaubt eine schonende Förderung von zur Koagulation neigenden Dispersionen während des Herstellprozesses ohne vorzeitigen Ausfall des Förderaggregates durch Anlagerung von Belägen an bewegten Komponenten und ohne nennenswerte Qualitätsverluste des zu fördernden Mediums. Eine Komplettauskleidung aller medienberührenden Teile der scherungsarm fördernden Zylinder- bzw. Schlauchmembranpumpe reduziert bzw. verhindert eine Belag- und Koagulatbildung im Inneren der Fördereinrichtung erheblich und setzt durch die längeren Standzeiten den Reinigungsaufwand herab, wodurch die Anlagenverfügbarkeit positiv beeinflusst wird. Die scherungsarm fördernde Zylinder- bzw. Schlauchmembranpumpe kann außer in einem, dem Polymerisationsbehälter zugeordneten Kühlkreislauf, auch zur Weiterförderung von zur Koagulation neigenden Dispersionen in einer Herstellanlage eingesetzt werden, wobei während der Förderung aufgrund des scherungsarmen Förderprinzips der Zylinder- bzw. Schlauchmembranpumpe eine Koagulation des zu fördernden Mediums nicht stattfindet. Innerhalb des Kühlkreislaufes kann die Zylinder- bzw. Schlauchmembranpumpe an verschiedenen Stellen positioniert werden, so zum Beispiel vor oder nach dem Wärmetauscher. Eine Reinigung der Zylinder- bzw. Schlauchmembranpumpe ist aufgrund ihrer Komplettauskleidung mit einer reibungsvermindernden Beschichtung sehr einfach realisierbar. Die sich einstellenden Pulsationen können für eine signifikante Reduktion bzw. Vermeidung von Wandbelägen im Umwälzkreis sorgen.

Unter Einsatz der extrem scherungsarm fördernden Zylinder- bzw. Schlauchmembranpumpe kann ein Verfahren zur Herstellung von Homo- oder Copolymeren im großtechnischen Maßstab betrieben werden, bei welchem das Polymere zu mindestens 90 Gew.-%, insbesondere zu mindestens 93 Gew.-% aus einem oder mehreren der genannten Monomeren entsteht und die Polymerisationstemperatur zwischen 50°C und 100°C, besonders bevorzugt zwischen 60°C und 95°C und ganz besonders zwischen 70°C und 95°C liegt. Das erfindungsgemäße Verfahren kann entweder so durchgeführt werden, dass in der Stufe a) oder in einer Kombination aus a) und b) bereits eine Teilmenge an Monomer(en) vorgegeben und später in Stufe c), die auch in Gradientenfahrweise durchfahren werden kann oder in einer Kombination aus b) und c), wobei b) und c) sowohl einstufig als auch in Gradientenfahrweise durchfahren werden kann die Restmenge zugesetzt wird, oder die Gesamtmenge ausschließlich in Stufe c), sei es einstufig oder in Gradientenfahrweise oder in einer Kombination aus den Stufen b) und c) (einstufig oder in Gradientenfahrweise) zugeführt wird. Falls in Stufe a) oder in Kombination der Stufen a) und b) bereits eine Vorgabe an Monomer(en) erfolgt, so beträgt sie zweckmäßigerweise zwischen 3 und 30 Gew.-% der zuzuführenden Gesamtmenge an Monomer(en), bevorzugt 5 bis 25 Gew.-% und 8 bis 20 Gew.-%. Wasserunlösliche oder schwer wasserlösliche Monomere werden zweckmäßigerweise bereits in Emulsionsform, d.h. mit Wasser und Dispergierhilfsmittel versetzt zugeführt.

Als Hauptmonomere zu nennen sind zum Beispiel Alkyl(meth)acrylate wie Methylmethacrylat, Methylacrylat, n-Butylacrylat, Ethylacrylat und 2-Ethyl-hexylacrylat. Ferner sind auch Mischungen der Alkyl(meth)acrylate geeignet. Daneben kommen Vinylester von Carbonsäuren mit 1-20 C-Atomen wie zum Beispiel Vinyllaurat, -stearat, Vinylpropionat, Versaticsäurevinylester und Vinylacetat in Betracht. Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril. Es lassen sich daneben die Vinylhalogenide mit Chlor, Fluor oder Brom substituierte, ethylenisch ungesättigte Verbindungen, bevorzugt Vinylchlorid und Vinylidenchlorid einsetzen. Als Vinylether zu nennen sind zum Beispiel Vinylmethylether oder Vinylisobutylether. Bevorzugt werden Vinylether von 1 bis 4 C-Atomen enthaltende Alkohole. Ferner sind zu nennen Kohlenwasserstoffe mit 2 bis 8 C-Atomen und ein oder zwei olefinischen Doppelbindungen.

Hauptmonomere sind die Alkyl(meth)acrylate, insbesondere die C₁-C₈-Alkyl(meth)acrylate, vinylaromatische Verbindungen mit bis zu 20 C-Atomen, insbesondere Styrol und Mischungen der vorstehenden Monomere. Weitere Monomere sind zum Beispiel Hydroxylgruppen enthaltende Monomere, insbesondere C₁-C₁₀-Hydroxyalkal(meth)acrylate, (Meth)acrylamid, ethylenisch ungesättigte Säuren, insbesondere Carbonsäuren wie (Meth)acrylsäure oder Itaconsäure und deren Anhydride, Dicarbonsäuren und deren Anhydride oder Halbester, zum Beispiel Maleinsäure, Fumarsäure oder Maleinsäureanhydrid. Als Kohlenwasserstoffe mit 2 bis 8 C-Atomen und zwei olefinischen Doppelbindungen seien Butadien, Isopren und Chloropren genannt.

Bei der Emulsionspolymerisation werden üblicherweise ionische und/oder nichtionische Emulgatoren und/oder Schutzkolloide bzw. Stabilisatoren als grenzflächenaktive Verbindungen verwendet.

Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000g pro Mol liegen. Selbstverständlich müssen im Falle der Verwendung von Gemischen grenzflächenaktiver Substanzen die Einzelkomponenten miteinander verträglich sein, was im Zweifelsfalle anhand weniger Vorversuche überprüft werden kann. Vorzugsweise werden anionische und nichtionische Emulgatoren als grenzflächenaktive Substanzen verwendet. Gebräuchliche begleitende Emulgatoren sind zum Beispiel ethoxylierte Fettalkohole (EO-Grad: 3-50, Alkylrest: C₈-C₃₈) , ethoxylierte Mono-, Di- und Tri-Alkylphenole (EO-Grad: 3-50; Alkylrest: C₄-C₉), Alkalimetallsalze von Dialkylestern der Sulfobernsteinsäure sowie Alkali- und Ammoniumsalze von Alkylsulfaten (Alkylrest: C₈-C₁₂), von ethoxylierten Alkanolen (EO-Grad 4-30, Alkylrest: C₁₂-C₁₈), von ethoxylierten Alkylphenolen (EO-Grad: 3-50, Alkylrest: C₄-C₉), von Alkylsulfonsäuren (Alkylrest: C₁₂-C₁₈), von Alkylarylsulfonsäuren (Alkylrest: C₉-C₁₈) und von Sulfonaten ethoxylierter Fettalkohole. Weitere geeignete Emulgatoren finden sich auch in Houben-Weyl, Methoden der organischen Chemie, Band 14/1, Makromolekulare Stoffe, Georg Thieme Verlag, Stuttgart 1961, Seiten 192 bis 208.

Die Saat wird entweder in-situ erzeugt oder bereits vorgegeben. Gegebenenfalls kann die Zugabe zu verschiedenen Zeitpunkten erfolgen, zum Beispiel um eine polydisperse oder polymodale, zum Beispiel bimodale Verteilung zu bewirken. Die Mengenanteile sind - bezogen auf den Anteil an Monomer(en) als 100 Gew.-% - häufig 0,1 bis 5,0 Gew.-%, bevorzugt 0,2 bis 3,0 Gew.-%.

Wasserlösliche Initiatoren für die Emulsionspolymerisation sind zum Beispiel Ammonium- und Alkalimetallsalze der Peroxidischwefelsäure, zum Beispiel Natriumperoxodisulfat, Wasserstoffperoxid oder organische Peroxide, wie zum Beispiel tert-Butylhydroperoxid. Geeignet sind sogenannte Reduktions-, Oxidations(Red-Ox)-Initiatorsysteme. Die Red-Ox-Initiator-Systeme bestehen aus mindestens einem, meist anorganischen Reduktionsmittel und einem anorganischen oder organischen Oxidationsmittel. Bei der Oxidationskomponente handelt es sich zum Beispiel um die bereits vorstehend genannten Initiatoren für die Emulsionspolymerisation.

Bei der Reduktionskomponente handelt es sich zum Beispiel um Alkalimetallsalze der schwefligen Säure wie zum Beispiel Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind zum Beispiel Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, wie zum Beispiel die Reduktionskomponente, können auch Mischungen sein, zum Beispiel eine Mischung aus dem Natriumsalz der Hydroxymethansulfinsäure und Natriumdisulfit. Die Menge der Initiatoren beträgt im allgemeinen 0,1 bis 10 Gew.-%, bevorzugt 0,2 bis 5 Gew.-%, bezogen auf alle zu polymerisierenden Monomeren. Es können auch mehrere verschiedene Initiatoren bei der Emulsionspolymerisation Verwendung finden.

Während der Reaktion ist auch der Zusatz von bis zu 5 Gew.-% - bezogen auf den Anteil an Monomer(en) als 100 Gew.-% - an Hilfsstoffen wie Molekulargewichtsreglern, weiteren Tensiden, Säuren, Salzen oder Komplexbildnern möglich. Wird die Polymerisation in Gegenwart von 3 bis 10 Gew.-% eines flüchtigen organischen Treibmittels durchgeführt, dann lassen sich nach den erfindungsgemäßen Verfahren auch expandierbare Polymere wie zum Beispiel expandierbares Polystyrol herstellen.

Zur Konfektionierung, die zum Beispiel zur Erhöhung der Lagerstabilität notwendig ist, können dem Endprodukt der Emulsionspolymerisation Laugen, wie wässrige NaOH-Lösung oder Basen (NH₃ oder geeignete Amine) zur Einstellung eines pH-Wertes zwischen 4 und 10 zugesetzt werden. Weitere bekannte Zusätze sind Konservierungsmittel wie Mikrobiozide, Filmbildungs- oder Verlaufmittel, Entschäumer oder die Haftung erhöhende Harzemulsionen.

Die Emulsionspolymerisation erfolgt in der Regel bei 30 bis 150, vorzugsweise bei 50 bis 95°C. Das Polymerisationsmedium kann sowohl nur aus Wasser, als auch aus Mischungen aus Wasser und damit mischbaren Flüssigkeiten wie zum Beispiel Methanol bestehen. Vorzugsweise wird nur Wasser verwendet. Die Emulsionspolymerisation kann sowohl als Batch-Prozess als auch in Form eines Zulaufverfahrens, einschließlich Stufen- oder Gradientenfahrweise durchgeführt werden. Bevorzugt ist das Zulaufverfahren, bei dem man einen Teil des Polymerisationsansatzes oder auch eine Polymersaat vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich stufenweise oder unter Überlagerung eines Konzentrationsgefälles unter Aufrechterhaltung der Polymerisation der Polymerisationszone zuführt.

Die im externen, dem Polymerisationsbehälter zugeordneten Kühlkreislauf oder in Leitungsabschnitten, welche zur Koagulation neigende Dispersionen weiteren Verarbeitungsschritten zuführen, eingesetzten Einrichtungen sind für eine großtechnische Verfahrensführung geeignet. Die eingesetzte, extrem scherungsarm fördernde Zylinder- bzw. Schlauchmembranpumpe übt eine besonders niedrige Scherwirkung auf die zur Koagulation neigenden Dispersionen aus und ist druckfest gegen Drücke bis zu 25 bar (bei Bedarf auch mehr). Das scherungsarm fördernde Förderaggregat hat einen Stundendurchsatz von bis zu 100 m³/h, bevorzugt 60 m³/h, besonders bevorzugt bis zu 45 m³/h und muss auch Temperaturen von mehr als 100°C verkraften.

Durch Parallelschaltung mehrerer Zylinder- bzw. Schlauchmembranpumpen kann die maximale Fördermenge dem Prozess angepasst werden.

Die eingesetzte extrem scherungsarm fördernde Zylinder- bzw. Schlauchmembranpumpehat Dank der Auskleidung der medienberührenden Teile mit einer reibungsvermindernden Beschichtung wie zum Beispiel PTFE eine lange Standzeit, die Standzeiten sind durch die Innenauskleidung der Zylinder- bzw. Schlauchmembranpumpe sehr lang. Die Zylinder- bzw. Schlauchmembranpumpe hat darüber hinaus keine schlecht durchströmten Zonen, wobei sie sehr einfach aufgebaut ist, so dass sie sich bei sehr instabilen Emulsionspolymerisaten über einen weiten Viskositätsbereich einsetzen lässt. Die Zylinder- bzw. Schlauchmembranpumpe hat keine dynamischen Dichtungen. Sie ist hermetisch dicht und trägt somit zur Erhöhung der Anlagensicherheit bei. Darüber hinaus ist die eingesetzte Zylinder- bzw. Schlauchmembranpumpe selbstansaugend und trockenlaufsicher; es werden kaum Verschleißteile eingesetzt, da die Membran mittels hydraulischer Kraftübertragung betätigt wird, so dass lange Standzeiten erzielt werden und geringe Reparatur- und Wartungskosten anfallen.

Die Wärmetauscher können derart betrieben werden, dass sich in diesen sowohl ein im wesentlichen laminares oder auch ein turbulentes Strömungsprofil ausbildet; die Einwirkung von Scherkräften soll möglichst gering sein, um eine Koagulatbildung von zur Koagulation neigenden Dispersionen zu verhindern, wobei insbesondere keine nichtdurchströmten Zonen auftreten dürfen.

Das erfindungsgemäß vorgeschlagene, in großtechnischen Anlagen betreibbare Verfahren eignet sich insbesondere zur Herstellung wässriger Polymerdispersionen, deren Verfilmung eine niedrige Glasübergangstemperatur (DSC-Verfahren) aufweist; es eignet sich besonders bei Glasübergangstemperaturen von < 150°C, bevorzugt von < 100°C, insbesondere von < 50°C. Des weiteren zeigt sich seine Eignung auch für Polymerdispersionen mit einer mittleren Teilchengröße zwischen 50 bis 2000 nm, insbesondere 100 bis 1500 nm. Die Polymerdispersion hat eine Viskosität von 30 bis 2000 mPas (gemessen bei 100 s⁻¹); während der Polymerisation kann die Viskosität auch höher oder niedriger liegen.

Anhand der Zeichnung wird die Erfindung nachfolgend eingehender beschrieben:

Es zeigt:
- Figur 1: eine schematische Darstellung der für das Verfahren notwendigen Anlagenkomponenten,
- Figur 2: die extrem scherungsarm fördernde Zylinder- bzw. Schlauchmembranpumpe während ihres Ansaugtaktes und
- Figur 3: die Zylinder- bzw. Schlauchmembranpumpe während eines Pumptaktes und
- Figur 4: eine Ausführungsvariante der Fördereinrichtung in geschnittener Darstellung.

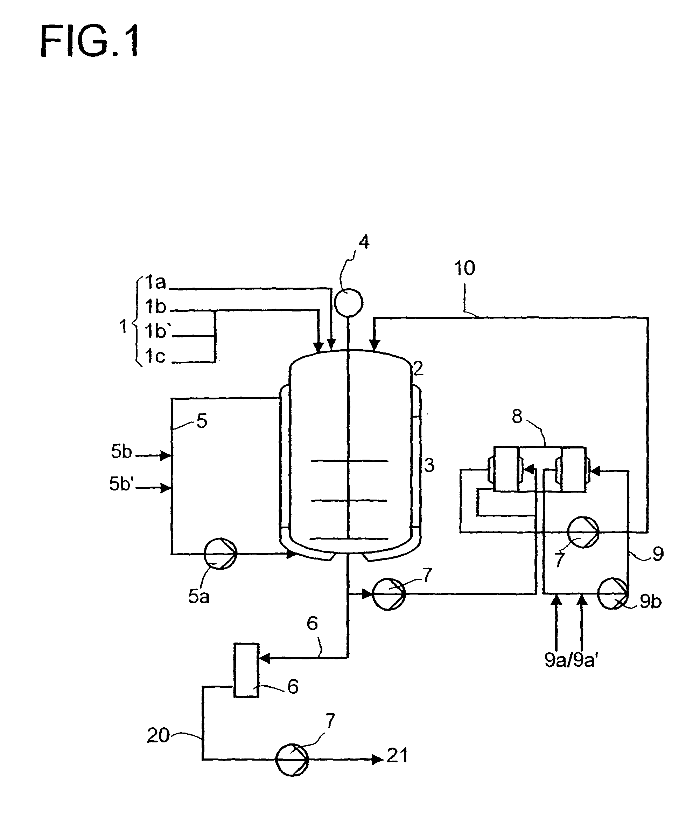

Der Darstellung gemäß Figur 1 ist entnehmbar, dass aus Vorratsbehältern bzw. Rohrleitungen 1 das Monomere(n) 1b, 1b', der Initiator 1c, gegebenenfalls unter Zuführung von Wasserdampf über 1a) in den mit einem durch einen Motor angetriebenen Rührer 4 ausgestatteten Polymerisationsbehälter 2, ausgelegt bis beispielsweise 15 bar, gegeben werden kann, wobei die Innenvolumina des Polymerisationsbehälters 15 bis 100 m³ betragen können. Der Polymerisationsbehälter 2 umfasst einen Heiz-/Kühlmantel 3, dessen Kreislauf 5 mit Kühlwasser 5b oder mit Wasserdampf 5b' gespeist und über eine Pumpe 5a betrieben werden kann. Das fertige Produkt aus dem Polymerisationsbehälter 2 kann über eine Rohrleitung 6 mit Wasserdampf/Stickstoff in einem Vorratsbehälter 6 zwischengelagert werden. Die extrem scherungsarm fördernde Zylinder- bzw. Schlauchmembranpumpe 7, die sowohl vor als auch nach dem Wärmetauscher 8 installiert werden kann, transportiert das zur Koagulation neigende Reaktionsgemisch über eine Rohrleitung bzw. Schlauchleitung zu einem oder mehreren Wärmetauschern 8, die über den Kreislauf 9 zur Kühlung über ein Kühlmedium fördernde Pumpe 9b entweder mit Kühlwasser 9a oder Wasserdampf 9a' gesteuert werden. Der oder die Wärmetauscher 8 können zum Beispiel als Plattenwärmetauscher, in welchem sich ein turbulentes Strömungsprofil einstellt, oder auch als Spiralwärmetauscher, in welchem sich ein im wesentlichen laminares Strömungsprofil einstellt, ausgebildet werden. Die Austauscherfläche der Wärmetauscher liegt in der Größenordnung von etwa 20 m². Der externe Kühlkreislauf 10 führt über Rohrleitungen wieder in den Polymerisationsbehälter 2 zurück.

Die Kontrolle und Steuerung der jeweiligen Heiz-/Kühlkreisläufe 9 bzw. 10 des Polymerisationsbehälters 2 bzw. des Wärmetauschers 8 erfolgt zweckmäßigerweise über eine Kaskadenkontrolle. Eine erste Temperaturmessung erfolgt üblicherweise innen im Polymerisationsbehälter 2, eine Zweite im Heiz-/Kühlkreislauf 3 des Polymerisationsbehälters 2 in Kombination mit der des Reaktionsgemisches in der Rohrleitung nach Verlassen des Wärmetauschers 8; eine dritte Temperaturmessung wird in der Regel in der Rohrleitung nach Verlassen des Wärmetauschers 8 in Kombination des Heiz-/Kühlkreislaufs 9 des Wärmetauschers 8 vorgenommen.

Die vom Polymerisationsbehälter 2 abgezogene, zur Koagulation neigende Dispersion kann über eine Zuleitung 20 mit Hilfe der extrem scherungsarm fördernden Zylinder- bzw. Schlauchmembranpumpe 7 in weitere Behälter 21 bzw. weitere Anlagenkomponenten des Herstellungsprozesses wie zum Beispiel Anlagenteile zur Entfernung der Restmonomeren oder zur Konfektionierung gefördert werden.

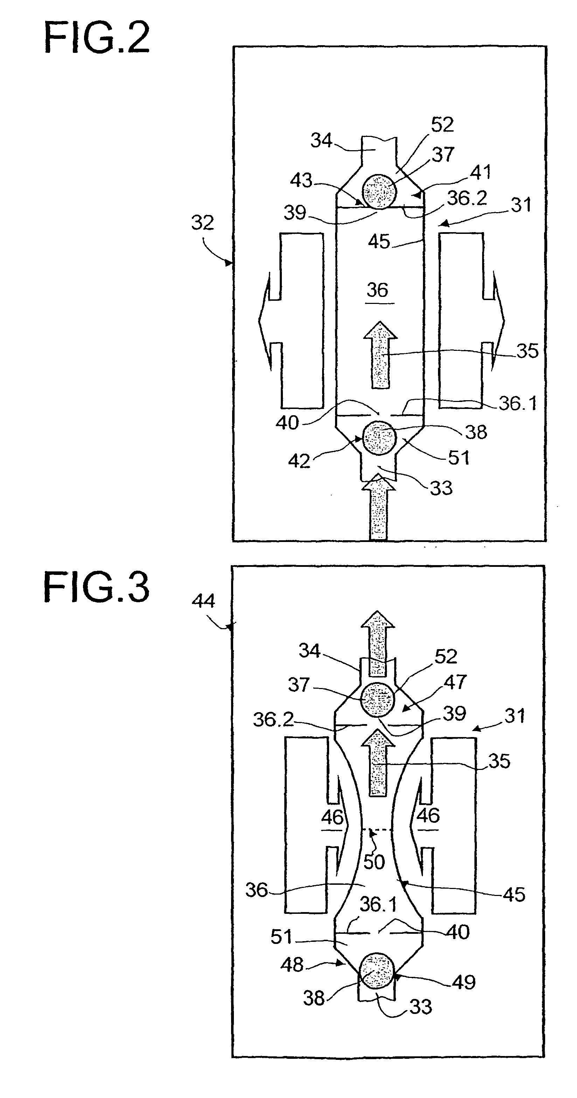

Aus der Darstellung gemäß Figur 2 geht ein scherungsarm förderndes Förderaggregat während des Pumptaktes hervor.

Während des Ansaugtaktes 32 ist ein in einer Einlasskammer 51 aufgenommener, vorzugsweise kugelförmig konfigurierter Schließkörper 38 von einer Einlassöffnung 40, die sich in einem ersten Schott 36.1 eines Förderraumes 36 befindet, derart zurückgestellt, dass durch die freigegebene Einlassöffnung 40 zu förderndes, zur Koagulation neigendes Medium in Förderrichtung 35 in den Förderraum 36 eintritt. Über einen Einlass 33 strömt zur Koagulation neigendes Medium durch die Einlasskammer 51 bei Offenstellung 42 des kugelförmig konfigurierten Schließkörpers 38 in den Förderraum 36 ein. Gleichzeitig ist eine oberhalb eines zweiten Schotts 36.2 aufgenommener, ebenfalls kugelförmig konfigurierter Schließkörper 37 derart in seine Schließstellung 41 gefahren, dass der vorzugsweise kugelförmig konfigurierte Schließkörper 37 eine Auslassöffnung 39 im zweiten Schott 36.2 dichtend verschließt. Demzufolge strömt das über die Einlassöffnung 40 im ersten Schott 36.1 in den Förderraum 36 eintretende, zur Koagulation neigende Medium lediglich in diesen ein und wird am Einströmen in einen Auslass 34 gehindert. Im in Figur 2 dargestellten Zustand, d.h. dem Ansaugtakt 32 der erfindungsgemäß konfigurierten Fördereinrichtung 31, nimmt der Schließkörper 37, der auslaßseitig in einer Auslasskammer 52 aufgenommen ist, eine dichtende Anlage an einem Dichtsitz 43 am zweiten Schott 36.2, welches den Förderraum 36 in Strömungsrichtung 35 begrenzt, ein.

Das Eintreten eines während eines Pumptaktes 44 zu fördernden Volumens des zur Koagulation neigenden Mediums wird durch eine Druckentlastung der verformbaren Wandung 45 des Förderraumes 36 erzielt. Das in den Förderraum 36 über die Einlassöffnung 40 bei Offenstellung 42 des einlaßseitigen Schließelementes 38 eintretende Volumen ist abhängig von der während des Ansaugtaktes 32 erzielbaren Verformung der verformbaren Wandung 45 nach außen sowie abhängig von der Größe des Förderraumes 36.

Die Figur 3 zeigt die Zylinder- bzw. Schlauclunembranpumpe während eines Pumptaktes.

Während des mit Bezugszeichen 44 bezeichneten Pumptaktes der erfindungsgemäß beschaffenen Fördereinrichtung 31 ist der den Einlass 33 verschließende Schließkörper 38 in einen Dichtsitz 49 gefahren. In dieser Position verschließt der einlaßseitig vorgesehene Schließkörper 38 den Zulauf zur Einlasskammer 51, so dass das zur Koagulation neigende Medium nicht in diese einströmt und insbesondere nicht in den Förderraum 36 eintritt. Die Einlasskammer 51 ist über die Öffnung 40 im ersten Schott 36.1, welches den Förderraum 36 begrenzt, mit dem Förderraum 36 verbunden. Während des Pumptaktes ist der die Auslassöffnung 39 am ersten Schott 36.1, welches den Förderraum 36 begrenzt, verschließende auslaßseitig vorgesehene Schließkörper 37 aus seiner Schließstellung 41 gemäß der Darstellung in Figur 2 herausgefahren und gibt in seiner Offenstellung 47 die Öffnung 39 im ersten Schott 36.1, welches den Förderraum 36 begrenzt, frei. Dadurch ist sichergestellt, dass bei einer Druckbeaufschlagung 46 der verformbaren Wandung 45 und der auf diese Weise eingeleiteten Kontraktionsbewegung des Förderraumes 36 das in diesem enthaltene Volumen vom zur Koagulation neigendem Medium in Förderrichtung 35 durch die Öffnung 39 im zweiten Schott 36.2 in die Auslasskammer 52 einströmt, den dort enthaltenen Schließkörper 37, vorzugsweise in Kugelform ausgebildet, umströmt und über den Auslass 34 die Zylinder- bzw. Schlauchmembranpumpe 7 verlässt. Die Druckbeaufschlagung 46 der verformbaren Wandung 45 des Förderraumes 36 erfolgt bevorzugt über die Kompression einer Flüssigkeit, die die verformbare Wandung 45 des Förderraumes 36 an deren Außenseite umgibt. Dadurch ist sichergestellt, dass eine gleichmäßige Verformung der Wandung 45 erzeugt wird, so dass das in dieser aufgenommene, zu fördernde Volumen vom zur Koagulation neigenden Medium möglichst scherungsarm in Richtung des Auslasses 34 gefördert wird. Pro Kontraktion des Förderraumes 36 des Förderaggregates 31 kann bis zu 1/3 des Volumens des Förderraumes 36 an fluidem System gefördert werden. Die vorzugsweise als Zylindermembran bzw. Schlauchmembran gestaltete verformbare Wandung 45 ist im Bereich des ersten Schotts 36.1 und im Bereich des zweiten Schotts 36.2 vorzugsweise an der in Figur 3 nicht dargestellten Einspannstellung hermetisch im Gehäuse abgedichtet gehalten, so dass der Austritt von zur Koagulation neigendem, zu förderndem Medium aus dem Förderraum 36 der erfindungsgemäß konfigurierten Fördereinrichtung 31 wirksam verhindert wird. Neben einer Beschichtung (PTFE) der verformbaren Wandung 45 kann diese auch aus Vollmaterial (PTFE) oder einem anderen reibungsvermindernden Material bestehen. Neben dem Einsatz eines reibungsvermindernden Materials kann als Werkstoff auch ein verformbares, die Kontraktion bzw. Expansion der Wandung 45 zulassendes Material eingesetzt werden, das keiner Beschichtung bzw. speziellen Materialbehandlung bedarf.

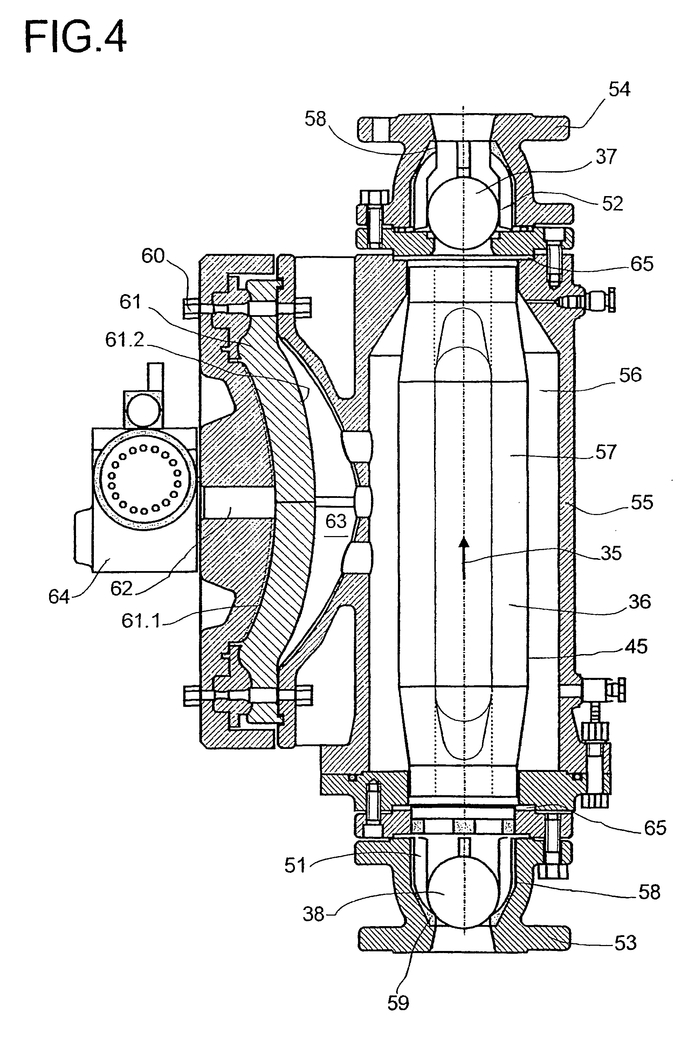

Aus der Darstellung gemäß Figur 4 geht eine Ausführungsvariante der vorgeschlagenen Fördereinrichtung in geschnittener Darstellung näher hervor.

Die Darstellung gemäß Figur 4 zeigt eine Fördereinrichtung, in deren Gehäuse 55 ein vorzugsweise als Zylinder- bzw. Schlauchmembran ausgebildeter Förderraum 36 vorgesehen ist. Die verformbare Wandung 45 begrenzt den Förderraum 36. Die den hohlen Förderraum 36 umgebende verformbare Wandung 45 ist an Einspannstellen 65 im Gehäuse 55 der Fördereinrichtung dichtend eingespannt. Zwischen der Innenwandung und der Außenseite der verformbaren Wandung 45 des Förderraumes 36 ist ein Hohlraum 56 ausgebildet. Im Hohlraum 56 befindet sich ein Flüssigkeitsvolumen einer inerten Flüssigkeit wie zum Beispiel Glykol.

Einlaßseitig ist am Gehäuse ein Einlassflansch 53 befestigt, welcher eine Einlasskammer 51 umfasst, in welcher der einlaßseitige Schließkörper 38 enthalten ist. Im Bereich des Auslasses 34 ist am Gehäuse 55 der erfindungsgemäß konfigurierten Fördereinrichtung ein Auslassflansch 54 vorgesehen, der seinerseits eine Auslasskammer 52 aufnimmt, in dem das auslaßseitig vorgesehene Schließelement 37, vorzugsweise in Kugelform gestaltet, aufgenommen ist.

Der sich im wesentlichen parallel zur Förderrichtung 35 für das zu fördernde, zur Koagulation neigende Medium erstreckende Förderraum 36 ist als Zylindermembran bzw. Schlauchmembran beschaffen, deren Endbereiche jeweils in Einspannstellen 65 am Gehäuse 55 der erfindungsgemäß vorgestellten Fördereinrichtung dichtend eingespannt sind. Der Hohlraum 56, welcher die Aussenwandung der verformbaren Wandung 45 umgibt, wird durch eine am Gehäuse 55 über Befestigungsschrauben 60 befestigte, jedoch verformbare Flaclunembran 61 beaufschlagt. Die Flachmembran 61 umfasst eine Innenwandung 61.1, welche über einen Anschluss 62 für ein Druckmedium, eine pneumatische Antriebseinheit 64 zum Beispiel mit einem Druck beaufschlagt werden kann. Die Aussenwandung 61.2 der im Gehäuse 55 mit Befestigungsschrauben 60 fixierten Flachmembran 61 bildet eine bewegbare Begrenzung eines Druckraumes 63. Über die in Figur 4 beispielhaft dargestellten Bohrungen steht der Druckraum 63 und das darin enthaltene inerte Flüssigkeitsvolumen mit dem Hohlraum 56 im Gehäuse 55 in Verbindung, welcher den Förderraum 36 mit verformbarer Wandung 45 umgibt. Erfolgt eine Beaufschlagung der Flachmembran 61 über den Anschluss 62 für ein Druckmedium, ausgelöst durch eine Betätigung der pneumatischen Antriebseinheit 64, überträgt sich der im Druckraum 63 aufgebaute Druck auf das Flüssigkeitsvolumen der inerten Flüssigkeit, die im Hohlraum 56 zwischen der Aussenwandung der verformbaren Wandung 45 und der Innenseite des Gehäuses 55 aufgenommen ist und prägt der verformbaren Wandung 45 des Förderraumes 36 eine Kontraktionsbewegung auf.

Neben der hier dargestellten Beaufschlagung der Flachmembran 61 durch eine pneumatische Betätigungseinheit 64 lässt sich die Verformung der Flachmembran 61 selbstverständlich auch durch Beaufschlagung mit einem Hydraulikfluid durch eine hier nicht dargestellte Hydraulikbetätigungseinheit mit Elektroantrieb aufprägen. Beiden Antriebsvarianten ist gemeinsam, dass keine mechanischen, mit Verschleiß behafteten Teile Verwendung finden, was die Standzeit und die Reparatur- bzw. Wartungskosten der Fördereinrichtung für ein zur Koagulation neigendes Medium erheblich herabsetzt.

In weiterer Ausgestaltung ist die verformbare Wandung 45 der Fördereinrichtung von einem mit Druck beaufschlagbaren Hohlraum umschlossen. Der Hohlraum ist seinerseits von der Gehäusewandung umgeben, so dass ein Austreten von Fluid bei Beschädigung der verformbaren Wandung 45 wirksam verhindert werden kann. Dies trägt den steigenden Sicherheitsanforderungen an Produktionsanlagen Rechnung. In vorteilhafter Weise ist die verformbare Wandung 45 als Zylinder- oder Schlauchmembran ausgeführt. Eine ovale Vorverformung der Zylinder- bzw. Schlauchmembranpumpe 7 sollte bevorzugt werden. Andere Geometrien sind jedoch durchaus möglich. Damit lassen sich insbesondere Pulsationsbewegungen erzeugen, welche eine Anhaftung von zu fördernden Medien an der Innenseite der als verformbare Membranwand konfigurierten Wandung 45 des Förderraumes 36 verhindern. In bevorzugter Ausgestaltung können die die Medien berührenden Teile, zum Beispiel Schottwände, die den Förderraum 36 der Fördereinrichtung 7 in Strömungsrichtung begrenzen, sowie die Öffnungen in den Schottwänden freigebende Schließkörper sowie die Schließkörper umgebende Kammern mit einer PTFE-Beschichtung versehen werden. Neben einer PTFE-Beschichtung lassen sich auch andere reibungsvermindernde Materialien zur Auskleidung der genannten Komponenten der erfindungsgemäß vorgeschlagenen extrem scherungsarm fördernden Zylinder- bzw. Schlauchmembranpumpe 7 für zur Koagulation neigende Medien verwenden. Neben dem Einsatz eines reibungsvermindernden Materials kann als Werkstoff auch ein verformbares, die Kontraktion bzw. Expansion der Wandung 45 zulassendes Material eingesetzt werden, das keiner Beschichtung bzw. speziellen Materialbehandlung bedarf.

In vorteilhafter Ausgestaltung sind die Sitzflächen der Schließkörper im Einlass- und Auslassbereich der scherungsarm fördernden Zylinder- bzw. Schlauchmembranpumpe 7 vorgesehenen, eine Einlassöffnung bzw. eine Auslassöffnung frei verschließenden bzw. freigebenden Schließkörper kugelförmig konfiguriert und können mit einer reibungsvermindernden Beschichtung wie zum Beispiel PTFE versehen werden. Die per Ansaug- und Pumptakt der scherungsarm fördernden Zylinder- bzw. Schlauchmembranpumpe 7 den Einlass bzw. Auslass verschließenden Schließkörper sind in Kammern aufgenommen, die mit einer Auskleidung versehen sein können, die gegebenenfalls ein reibungsverminderndes Material enthält. Bevorzugt wird im Hohlraum innerhalb des Gehäuses der scherungsarm fördernden Zylinder- bzw. Schlauchmembranpumpe 7 zwischen der Innenwandung des Hohlraumes und der Aussenwandung der verformbaren Wandung 45 des Förderraumes 36 ein Hohlraum gebildet, in dem eine inerte Flüssigkeit wie zum Beispiel Glykol aufgenommen sein kann. Mit der inerten Flüssigkeit kann eine gleichmäßige Kontraktion bzw. Expansion der verformbaren Wandung 45 in Strömungsrichtung gesehen erzeugt werden. Bevorzugt wird im Hohlraum zwischen der verformbaren Wandung 45 und der Innenseite des Gehäuses der extrem scherungsarm fördernden Zylinder- bzw. Schlauchmembranpumpe aufgenommene Flüssigkeit über ein mittels eines Antriebs beaufschlagte Flachmembranpumpe druckbeaufschlagt und druckentlastet. Die Flachmembran wirkt über das im Hohlraum aufgenommene Flüssigkeitsvolumen mittelbar auf die verformbare Wandung 45 des Förderraumes ein und gestattet den Verzicht auf mechanische Antriebsteile, was die Verschleißanfälligkeit der erfindungsgemäß konfigurierten scherungsarm fördernden Zylinder- bzw. Schlauchmembranpumpe 7 erheblich mindert. Abhängig vom Druck, der der Flüssigkeit aufgeprägt wird, stellt sich die während des Pumptaktes erforderliche Kontraktion der verformbaren Wandung 45 bzw. während des Ansaugtaktes die erforderliche Expansion zum Ansaugen eines Fördervolumens am zur Koagulation neigenden Medium im Förderraum 36 ein. Der Antrieb kann in vorteilhafter Weise als ein pneumatischer Antrieb gestaltet werden, was den Verzicht auf mechanische Verschleißteile gestattet, da die Druckbeaufschlagung des im Hohlraum zwischen verformbarer Wandung 45 des Förderraumes und Innenwandung des Gehäuses der Fördereinrichtung durch einfache Verformung der Flachmembran erzielt werden kann. Die Flachmembran erstreckt sich im wesentlichen parallel zum Förderraum am Gehäuse und ist in Befestigungen an diesem fixiert.

Neben einer auf pneumatischem Wege erzielbaren Druckbeaufschlagung der Flachmembran kann diese auch über ein Hydraulikfluid beaufschlagt werden, was ebenfalls den Verzicht auf dem Verschleiß unterliegenden mechanischen Bauteile gestattet. Damit sind sehr lange Standzeiten der erfindungsgemäß vorgeschlagenen Zylinder- bzw. Schlauchmembranpumpe 7 erzielbar, was lange Wartungsintervalle und geringste Reparatur- und Wartungskosten nach sich zieht.

### Bezugszeichenliste

- 1: Rohrleitung
- 1a: Wasserdampf
- 1b: Monomer
- 1 b': Monomer
- 1c: Inhibitor
- 2: Polymerisationsbehälter
- 3: Heiz/Kühlmantel
- 4: angetriebener Rührer
- 5: Kreislauf
- 5b: Kühlwasser
- 5b': Wasserdampf
- 5a: Förderpumpe
- 6: Rohrleitung
- 6a: Vorratsbehälter
- 7: scherungsarm fördernde Zylinder- bzw. Schlauchmembranpumpe
- 8: Wärmetauscher
- 9: Wärmetauscherkreislauf
- 9b: Pumpe
- 9a: Kühlwasser
- 9a': Wasserdampf
- 10: externer Kühlkreislauf Polymerisationsbehälter 2

- 20: Zuleitung
- 21: weiterer Behälter bzw. Anlagenkomponenten

- 31: Fördereinrichtung
- 32: Ansaugtakt
- 33: Einlass
- 34: Auslass
- 35: Fördereinrichtung
- 36: Förderraum
- 36.1: erstes Schott
- 36.2: zweites Schott
- 37: Auslaßschließkörper
- 38: Einlaßschließkörper
- 39: Auslassöffnung
- 40: Einlassöffnung
- 41: Schließstellung von 37
- 42: Offenstellung von 38
- 43: Dichtsitz von 37
- 44: Pumptakt
- 45: verformbare Wandung
- 46: Druckbeaufschlagung
- 47: Offenstellung von 37
- 48: Schließstellung von 38
- 49: Dichtsitz von 38
- 50: engster Querschnitt
- 51: Einlasskammer
- 52: Auslasskammer
- 53: Einlassflansch
- 54: Auslassflansch
- 55: Gehäuse
- 56: Hohlraum
- 57: Zylindermembran (PTFE)
- 58: Auskleidung
- 59: Sitzfläche (PTFE)
- 60: Befestigungsschraube
- 61: Flachmembran
- 61.1: Innenwandung
- 61.2: Aussenwandung
- 62: Anschluss für Druckmedium
- 63: Druckraum
- 64: Antrieb
- 65: Einspannstellung verformbare Wandung 45

## Patentansprüche

1. Verfahren zur Herstellung von Polymerdispersionen mindestens eines der polymerisierbaren Monomeren aus den Gruppen Alkyl(meth)acrylate, Vinylester von Carbonsäuren mit 1-20 C-Atomen, vinylaromatischen Verbindungen, Nitrilen, Vinylhalogenide, Vinylether, Kohlenwasserstoffe mit 2-8 C-Atomen und ein oder zwei olefinischen Doppelbindungen, Hydroxylgruppen enthaltende Monomere in Emulsionspolymerisationstechnik bei einer Polymerisationstemperatur von mindestens 40°C, in Anwesenheit eines radikalischen Polymerisationsinitiators, **dadurch gekennzeichnet, dass** das zu mindestens 85 Gew.-% aus einem oder mehreren dieser Monomeren entstehende Polymere in folgenden Stufen hergestellt wird, wobei
a) in einer ersten Stufe Wasser als bei der Reaktion inertes Lösungsmittel gegebenenfalls Dispergierhilfsmittel, gegebenenfalls Saat und gegebenenfalls eine erste Teilmenge an Monomer(en) vorgegeben werden,
b) in einer zweiten Stufe der Initiator, und
c) in einer dritten Stufe die Restmenge oder die vollständige Menge an Monomer(en) direkt oder in Emulsionsform in Anwesenheit von weiterem Wasser und gegebenenfalls weiteren Dispergierhilfsmittel oder anderen Hilfsstoffen zugesetzt werden,
wobei die Stufen a) und b) oder b) und c) jeweils einstufig gefahren werden können oder b) und c) in Gradientenfahrweise durchfahrbar ist und in einzelnen oder allen Stufen das als Dispersion vorliegende Reaktionsgemisch durch einen vom und wieder zum Polymerisationsbehälter (2) führenden externen Kreislauf (10) bewegt wird, der ein oder mehrere extrem scherungsarm fördernde Zylinder- bzw. Schlauchmembranpumpen (7) und mindestens einen Wärmetauscher (8) mit einem im wesentlich laminaren Strömungsprofil aufweist und die Polymerisationstemperatur zwischen 40°C und 120°C liegt.

2. Verfahren gemäß Anspruch 1, **dadurch gekennzeichnet, dass** das Polymer zu mindestens 90 Gew.-% aus einem oder mehreren der Monomeren entsteht.

3. Verfahren nach einem der Ansprüche 1 oder 2, **dadurch gekennzeichnet, dass** das Polymer zu mindestens 93 Gew.-% aus einem oder mehreren der Monomeren entsteht.

4. Verfahren nach einem der Ansprüche 1 bis 3, **dadurch gekennzeichnet, dass** die Polymerisationstemperatur bei 50°C bis 100°C liegt.

5. Verfahren nach einem der Ansprüche 1 bis 4, **dadurch gekennzeichnet, dass** das Monomer mindestens eines aus der Styrol, Butadien, Alkyl(meth)acrylat und (Meth)acrylnitril ist.

6. Verfahren nach einem der Ansprüche 1 bis 5, **dadurch gekennzeichnet, dass** der Durchsatz an Reaktionsgemisch durch den externen Kreislauf (10) 5 bis 200 m³/h insbesondere 10 bis 100 m³/h beträgt.

7. Vorrichtung zur Durchführung insbesondere des Verfahrens nach einem der Ansprüche 1 bis 6, **dadurch gekennzeichnet, dass** sie
- Einrichtungen (1) zur Lagerung und Zugabe der Reaktions- und Hilfsstoffe,
- einen Reaktionsbehälter (2) einem Heiz-/Kühlmantel (3),
- Einrichtungen (6) zur Entleerung des Reaktionsbehälters (2),
- einen externen Kühlkreislauf (10) mit einem oder mehreren extrem scherungsarm fördernden Zylinder- bzw. Schlauchmembranpumpen (7), mindestens einem Wärmetauscher (8) mit einem laminaren oder turbulenten Strömungsprofil und
- Verbindungsleitungen (20) zwischen, von und zu den Einrichtungen der Vorrichtung
aufweist.

8. Vorrichtung nach Anspruch 7, **dadurch gekennzeichnet, dass** die extrem scherungsarm fördernde Zylinder- bzw. Schlauchmembranpumpe (7) einen Förderraum (36) zur Förderung von zur Koagulation neigenden Medien umfasst, der durch eine verformbare Wandung (45) begrenzt ist.

9. Vorrichtung gemäss Anspruch 8, **dadurch gekennzeichnet, dass** die verformbare Wandung (45) mit einer reibungsvermindernden Beschichtung versehen ist oder reibungsverminderndes Material enthält.

10. Vorrichtung gemäss Anspruch 8, **dadurch gekennzeichnet, dass** medienberührende Teile (37, 38, 45, 51, 52) mit einer reibungsvermindernden Beschichtung versehen sind oder reibungsvermindemdes Material umfassen.

11. Vorrichtung gemäß Anspruch 8, **dadurch gekennzeichnet, dass** die verformbare Wandung (45) von einem mit Druck beaufschlagbaren Hohlraum (56) umschlossen ist.

12. Vorrichtung gemäß Anspruch 8, **dadurch gekennzeichnet, dass** die verformbare Wandung (45) als Zylinder- oder Schlauchmembran mit ovaler Vorverformung ausgeführt ist.

13. Vorrichtung gemäß Anspruch 8, **dadurch gekennzeichnet, dass** die verformbare Wandung (45) an Einspannstellen (65) im Gehäuse (55) gehalten ist.

14. Vorrichtung gemäß Anspruch 8, **dadurch gekennzeichnet, dass** im von der verformbaren Wandung (45) am vom Gehäuse (55) begrenzten Hohlraum (56) eine inerte Flüssigkeit aufgenommen ist.

15. Vorrichtung gemäß Anspruch 14, **dadurch gekennzeichnet, dass** der Hohlraum (56) im Gehäuse (55) mit Glykol befüllt ist.

16. Vorrichtung gemäß einem oder mehrerer der Ansprüche 8, 11 bis 15, **dadurch gekennzeichnet, dass** die Flüssigkeit im Hohlraum (56) über eine mittels eines Antriebes (64) beaufschlagbare Flachmembran (61) druckbeaufschlagbar und druckentlastbar ist.

17. Vorrichtung gemäß Anspruch 16, **dadurch gekennzeichnet, dass** die Flachmembran (61) im wesentlichen parallel zum Förderraum (36) am Gehäuse (55) in Befestigungen (60) fixiert ist, an ihrer Innenwandung (61.1) mit einem Druckmedium beaufschlagt wird und mit ihrer Außenwandung (61.2) einen Druckraum (63) begrenzt.

18. Verwendung eines extrem scherungsarm fördernden Förderaggregates (7) für zu Koagulation neigende Medien, wie Dispersionen zur Herstellung von Homo- und Copolymeren in Emulsionspolymerisationstechnik, wobei das zu Koagulation neigende Medium in einen Förderraum (36) über einen Einlass (33) eintritt und diesen in Förderrichtung (35) über einen Auslass (34) verlässt, **dadurch gekennzeichnet, dass** eine den Förderraum (36) der scherungsarm fördernden Zylinder- bzw. Schlauchmembranpumpe (7) begrenzende, verformbare Wandung (45) sowie medienberührende Teile (37, 38, 45, 51, 52) mit einer reibungsvermindernden Beschichtung versehen sind oder aus Material mit reibungsvermindernden Eigenschaften bestehen.

## Claims

1. A process for preparing polymer dispersions of at least one of the polymerizable monomers from the groups consisting of alkyl (meth)acrylates, vinyl esters of carboxylic acids having 1-20 carbon atoms, vinylaromatic compounds, nitriles, vinyl halides, vinyl ethers, hydrocarbons having 2-8 carbon atoms and one or two olefinic double bonds, and hydroxyl-containing monomers in emulsion polymerization technology at a polymerization temperature of at least 40°C, in the presence of a free-radical polymerization initiator, which comprises preparing the polymer, which forms to at least 85% by weight from one or more of these monomers, in the stages below, in which
a) in a first stage, water, as reaction-inert solvent, dispersing assistants where appropriate, seed where appropriate, and a first portion of monomer(s), where appropriate, are introduced,
b) in a second stage, the initiator, and
c) in a third stage, the remainder or full amount of monomer(s) are added directly or in emulsion form in the presence of further water and, where appropriate, further dispersing assistant or other auxiliaries,
it being possible for stages a) and b) or b) and c) in each case to be run in one stage or b) and c) to be run through in a gradient procedure, and in all or some stages the reaction mixture present as a dispersion is moved by an external circuit (10) which leads from and back to the polymerization vessel (2) and which comprises one or more extremely low-shear-conveying cylinder or tubular diaphragm pumps (7) and at least one heat exchanger (8) having a substantially laminar flow profile, and the polymerization temperature is between 40°C and 120°C.

2. A process as claimed in claim 1, wherein the polymer is formed to at least 90% by weight from one or more of the monomers.

3. A process as claimed in one of claims 1 or 2, wherein the polymer is formed to at least 93% by weight from one or more of the monomers.

4. A process as claimed in one of claims 1 to 3, wherein the polymerization temperature is from 50°C to 100°C.

5. A process as claimed in one of claims 1 to 4, wherein the monomer is at least one of styrene, butadiene, alkyl (meth)acrylate, and (meth)acrylonitrile.

6. A process as claimed in one of claims 1 to 5, wherein the throughput of reaction mixture through the external circuit (10) is from 5 to 200 m³/h in particular from 10 to 100 m³/h.

7. An apparatus for conducting in particular the process as claimed in one of claims 1 to 6, which comprises
- devices (1) for storing and adding the reactants and auxiliaries,
- a reaction vessel (2) with a heating/cooling jacket (3),
- devices (6) for emptying the reaction vessel (2),
- an external cooling circuit (10) having one or more extremely low-shear-conveying cylinder or tubular diaphragm pumps (7), at least one heat exchanger (8) having a laminar or turbulent flow profile, and
- connecting lines (20) between, from and to the devices of the apparatus.

8. An apparatus as claimed in claim 7, wherein the extremely low-shear-conveying cylinder or tubular diaphragm pump (7) comprises a conveying chamber (36) for conveying media with a tendency to coagulate, said chamber being bounded by deformable walls (45).

9. An apparatus as claimed in claim 8, wherein the deformable walls (45) are provided with a friction-reducing coating or comprise friction-reducing material.

10. An apparatus as claimed in claim 8, wherein parts (37, 38, 45, 51, 52) in contact with media are provided with a friction-reducing coating or include friction-reducing material.

11. An apparatus as claimed in claim 8, wherein the deformable walls (45) are surrounded by a pressurizable cavity (56).

12. An apparatus as claimed in claim 8, wherein the deformable walls (45) are configured as a cylinder diaphragm or tubular diaphragm with an oval predeformation.

13. An apparatus as claimed in claim 8, wherein the deformable walls (45) are held at clamping sites (65) in the housing (55).

14. An apparatus as claimed in claim 8, wherein an inert liquid is accommodated in the cavity (56) bounded by the deformable walls (45) from the housing (55).

15. An apparatus as claimed in claim 14, wherein the cavity (56) in the housing (55) is filled with glycol.

16. An apparatus as claimed in one or more of claims 8, 11 to 15, wherein the liquid in the cavity (56) is pressurizable and relievable from pressure by way of a flat diaphragm (61) which can be acted on by means of a drive (64).

17. An apparatus as claimed in claim 16, wherein the flat diaphragm (61) is fixed substantially parallel to the conveying chamber (36) on the housing (55) in fastenings (60), is acted on by a pressure medium on its inner wall (61.1), and with its outer wall (61.2) bounds a pressure chamber (63).

18. The use of an extremely low-shear-conveying unit (7) for media which tend toward coagulation, such as dispersions for preparing homopolymers and copolymers in emulsion polymerization technology, the medium with a tendency to coagulate entering a conveying chamber (36) via an inlet (33) and leaving said chamber (36) in the conveying direction (35) via an outlet (34), wherein deformable walls (45) which bound the conveying chamber (36) of the low-shear-conveying cylinder or tubular diaphragm pump (7), and also parts (37, 38, 45, 51, 52) that are in media contact, are provided with a friction-reducing coating or are composed of material having friction-reducing properties.

## Revendications

1. Procédé de préparation de dispersions polymères d'au moins un des monomères polymérisables du groupe comprenant des (méth)acrylates d'alkyle, des esters vinyliques, d'acides carboxyliques comportant 1 à 20 atomes de C, des composés vinylaromatiques, des nitriles, des halogénures de vinyle, des éthers vinyliques, des hydrocarbures comportant 2 à 8 atomes de C et une ou deux doubles liaisons oléfiniques, des monomères contenant des groupes hydroxyle, dans une technique de polymérisation en émulsion à une température de polymérisation d'au moins 40°C, en présence d'un amorceur de polymérisation radicalaire, **caractérisé en ce que** le polymère formé pour au moins 85% en poids d'un ou plusieurs de ces monomères est préparé dans les étapes suivantes, où
a) dans une première étape, on introduit de l'eau comme solvant inerte pour la réaction, éventuellement un adjuvant de dispersion, éventuellement un agent de germination et éventuellement une première quantité partielle de monomère(s),
b) dans une deuxième étape, on ajoute l'amorceur, et
c) dans une troisième étape, on ajoute la quantité restante ou la quantité totale de monomère(s) directement ou sous forme d'émulsion, en présence d'eau supplémentaire et éventuellement d'adjuvant de dispersion supplémentaire ou d'autres adjuvants, les étapes a) et b) ou b) et c) pouvant être chaque fois conduites en une étape ou les étapes b) et c) pouvant être effectuées suivant un mode à gradients et, dans des étapes individuelles ou toutes les étapes, le mélange réactionnel qui se présente sous la forme d'une dispersion étant déplacé à travers un circuit externe (10) qui conduit du récipient de polymérisation (2) à nouveau à lui-même et qui présente une ou plusieurs pompes à membrane cylindrique ou tubulaire de transport (7) à cisaillement extrêmement faible et au moins un échangeur de chaleur (8) ayant un profil d'écoulement sensiblement laminaire, la température de polymérisation étant située entre 40°C et 120°C.

2. Procédé suivant la revendication 1, **caractérisé en ce que** le polymère est formé pour au moins 90% en poids d'un ou plusieurs des monomères.

3. Procédé suivant l'une des revendications 1 et 2, **caractérisé en ce que** le polymère est formé pour au moins 93% en poids d'un ou plusieurs des monomères.

4. Procédé suivant l'une des revendications 1 à 3, **caractérisé en ce que** la température de polymérisation est située à 50°C jusqu'à 100°C.

5. Procédé suivant l'une des revendications 1 à 4, **caractérisé en ce que** le monomère est au moins un monomère parmi du styrène, du butadiène, du (méth)acrylate d'alkyle et du (méth)acrylonitrile.

6. Procédé suivant l'une des revendications 1 à 5, **caractérisé en ce que** le débit du mélange réactionnel au travers du circuit externe (10) est de 5 à 200 m³/h, en particulier de 10 à 100 m³/h.

7. Appareil pour la mise en oeuvre, en particulier du procédé suivant l'une des revendications 1 à 6, **caractérisé en ce qu'**il présente
- des dispositifs (1) pour le stockage et l'addition des substances réactionnelles et des adjuvants,
- un récipient réactionnel (2) pourvu d'une chemise de chauffage/refroidissement (3),
- des dispositifs (6) pour vider le récipient réactionnel (2),
- un circuit de refroidissement externe (10) comportant une ou plusieurs pompes à membrane cylindrique ou tubulaire de transport (7) à cisaillement extrêmement faible, au moins un échangeur de chaleur (8) présentant un profil d'écoulement laminaire ou turbulent, et
- des conduits de communication (20) entre, depuis et vers les dispositifs de l'appareil.

8. Appareil suivant la revendication 7, **caractérisé en ce que** la pompe à membrane cylindrique ou tubulaire de transport (7) à cisaillement extrêmement faible comporte un compartiment d'avancement (36) qui est destiné à faire avancer des milieux ayant tendance à coaguler et qui est limité par une paroi déformable (45).

9. Appareil suivant la revendication 8, **caractérisé en ce que** la paroi déformable (45) est pourvue d'un revêtement réduisant les frottements ou contient une matière réduisant les frottements.

10. Appareil suivant la revendication 8, **caractérisé en ce que** des pièces en contact avec les milieux (37, 38, 45, 51, 52) sont pourvues d'un revêtement réduisant les frottements ou comportent une matière réduisant les frottements.

11. Appareil suivant la revendication 8, **caractérisé en ce que** la paroi déformable (45) est renfermée dans une cavité (56) qui peut être alimentée en pression.

12. Appareil suivant la revendication 8, **caractérisé en ce que** la paroi déformable (45) est exécutée sous la forme d'une membrane cylindrique ou tubulaire présentant une déformation préalable ovale.

13. Appareil suivant la revendication 8, **caractérisé en ce que** la paroi déformable (45) est maintenue en des points de serrage (65) dans le boîtier (55).

14. Appareil suivant la revendication 8, **caractérisé en ce qu'**un liquide inerte est reçu dans la cavité (56) limitée par la paroi déformable (45) du boîtier (55).

15. Appareil suivant la revendication 14, **caractérisé en ce que** la cavité (56) du boîtier (55) est remplie de glycol.

16. Appareil suivant l'une ou plusieurs des revendications 8, 11 à 15, **caractérisé en ce que** le liquide peut être alimenté en pression et détendu dans la cavité (56) par l'intermédiaire d'une membrane plate (61) qui peut être sollicitée au moyen d'un organe d'entraînement (64).

17. Appareil suivant la revendication 16, **caractérisé en ce que** la membrane plate (61) est fixée sensiblement parallèlement au compartiment d'avancement (36) du boîtier (55) dans des fixations (60), est sollicitée par un milieu sous pression sur sa paroi interne (61.1) et limite un compartiment de pression (63) avec sa paroi externe (61.2).

18. Utilisation d'une unité de transport (7) à cisaillement extrêmement faible pour des milieux ayant tendance à coaguler, comme des dispersions pour la préparation d'homopolymères et de copolymères dans une technique de polymérisation en émulsion, le milieu ayant tendance à coaguler pénétrant dans un compartiment d'avancement (36) par l'intermédiaire d'une entrée (33) et quittant celui-ci dans le sens d'avancement (35) par l'intermédiaire d'une sortie (34), **caractérisée en ce qu'**une paroi déformable (45) qui limite le compartiment d'avancement (36) de la pompe à membrane cylindrique ou tubulaire de transport (7) à faible cisaillement ainsi que des pièces en contact avec le milieu (37, 38, 45, 51, 52) sont pourvues d'un revêtement diminuant le frottement ou sont constituées d'une matière ayant des propriétés de réduction du frottement.
